# EUROPEAN PATENT APPLICATION

(11) **EP 0 702 464 A1**
(43) Date of publication of application: **20.03.1996**
(21) Application number: 95104325.6
(22) Date of filing: 23.03.1995
(51) Int. Cl.: H04J 3/06

(54) **Data communication system with time synchronization**

(30) Priority: 14.09.1994 US 306026
(71) Applicant: RACOTEK, INC., Minneapolis, Minnesota 55439 (US)
(72) Inventor: Shpantzer, Isaac, Edina, Minnesota 55439 (US); Schoenfeld, Lawrence J., Bloomington, Minnesota 55438 (US)
(74) Representative: Popp, Eugen, Dr.

(57) **Abstract**

A data communication system is provided having time synchronization over RF or other high latency infrastructure, between a first location having a first clock and a first data transmission device and a second location having a second clock and a second data transmission device. The system time-synchronizes the clocks over infrastructures by determining a first time corresponding to the fist clock time, determining a second time corresponding to the second clock time, transmitting data concerning the first time from the first data transmission device to the second data transmission device, comparing the second time with the first time, calculating the difference between the second time and the first time, and then adjusting one of the clocks to synchronize with the other of the clocks.

## Description

The present invention concerns a novel data communication system having time synchronization over radio or other high latency infrastructures.

In communications over high latency infrastructures, it is desirable to have the ability to diagnose the current state of the system. An accurate diagnosis is required in order to dynamically change the system to maintain its efficiency. Proper diagnosis requires information concerning the time delays throughout the system. However, to achieve proper diagnosis, the entire system should be on a common synchronized time base.

In one example of a communication system, in which data is communicated via radio between a static node and a number of mobile units, the static node includes host computers owned by a customer, a gateway computer (GW) provided by the network communication service company, and a radio. The mobile units include a mobile application processor (MAP) owned by the customer, a mobile communication controller (MCC) by the network communication service company, and a radio. Since the gateway computer and the MCC are typically provided by a single company, it is ordinarily not difficult to synchronize the clocks on these computers. However, the customer's host computers and MAP's may require synchronization to the gateway computer, the MCC or to each other.

The network may contain a number of static nodes as well as a large number of mobile units with gateway computers which are either hard wired to the host computers or transmission could be over land line modem, cellular modem, etc. Thus the gateway computers may be in a different location than the host computers and synchronization may be required between all of these units in different locations.

It is thus desirable to time synchronize between computers over infrastructures, including time synchronization over any kind of network including but not limited to an X-25 network, an LU6.2 network, token ring, either local or wide area, etc. It is also desirable to provide synchronization for high latency networks, such as RF, and also to provide time synchronization for non-RF and lower latency networks.

Other objects and advantages of the present invention will become apparent as the description proceeds.

### BRIEF DESCRIPTION OF THE INVENTION

In accordance with the present invention, a novel data communication system is provided having time synchronization over RF or other high latency infrastructure, between a first location having a first clock and a first data transmission device and a second location having a second clock and a second data transmission device. In one embodiment of the invention, in which a common event can be detected, the system includes the steps of determining a fist time corresponding to the first clock time, determining a second time corresponding to the second clock time, transmitting data concerning either the first time or the second time from its respective data transmission device to the other data transmission device, comparing the second time with the first time, calculating the difference between the second time and the first time, and adjusting either the first clock or second clock to synchronize with the other clock. In the illustrative embodiment, the adjusting step comprises either adding or subtracting the calculated difference.

In another embodiment of the invention, in which there is no common event, a system is provided for data communication via radio between the first location having a first clock and a first data transmission device and a second location having a second clock and a second data transmission device. The system includes the steps of (a) transmitting data from the first data transmission device to the second data transmission device, (b) determining a first time corresponding to the time on the first clock when the data is sent from the first data transmission device, (c) determining a second time corresponding to the time on the second clock when the data is received by the second data transmission device, (d) comparing the second time with the first time, and (e) calculating the difference between the second time and the first time. Steps (a) through (e) are repeated a plurality of times and the system determines each time whether the last difference between the second time and the first time is less than the calculated previous difference between the second time and the first time. If the difference is less, then the time of the first clock is adjusted to synchronize with the time of the second clock. However, if the difference is not less, the first clock time is not adjusted.

A more detailed explanation of the invention is provided in the following description and claims, and is illustrated in the accompanying drawings.

### BRIEF DESCRIPTION OF THE DRAWINGS

Fig. 1 is a block diagram of a data communication system constructed in accordance with the principles of the present invention.
Fig. 2 is a block diagram of a portion of the data communication system of Fig. 1
Fig. 3 is a block diagram of a portion of a data communication system in which there is no common event.
Fig. 4 is a time versus samples graph using the system of one embodiment of the invention.
Fig. 5 is a block diagram of the synchronized computers.
Fig. 6 is a time tag flow chart.
Fig. 7 is a flow chart showing the operation of a system according to the present invention in which there is a common event synchronization.
Fig. 8 is a flow chart showing a system of another embodiment in which there is a non-common event synchronization.

### DETAILED DESCRIPTION OF THE ILLUSTRATIVE EMBODIMENTS

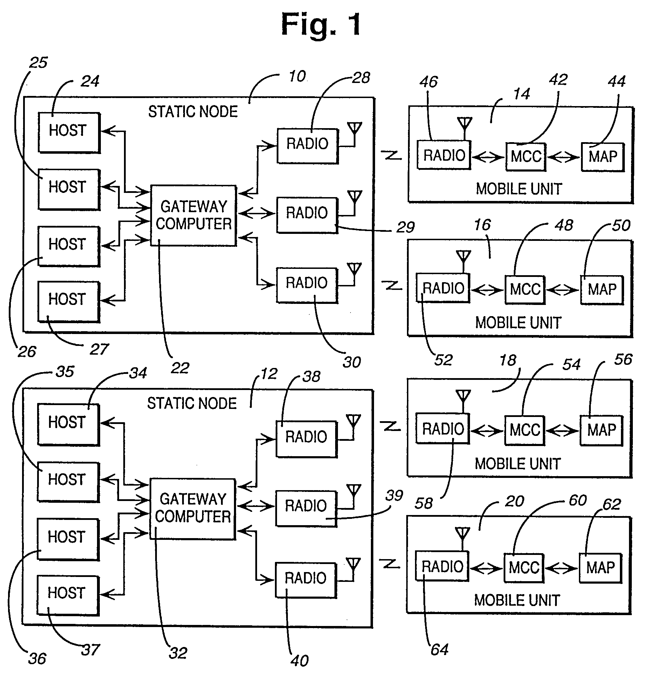

Referring to Fig. 1, a data communication system is shown therein comprising a static node 10, a static node 12, and mobile units 14, 16, 18 and 20. Static node 10 comprises a gateway computer 22 which communicates with host computers 24, 25, 26 and 27 and also communicates with radios 28, 29 and 30. Static node 12 comprises gateway computer 32 which communicates with host computers 34, 35, 36 and 37 and also communicates with radios 38, 39 and 40. Mobile unit 14 comprises a mobile communication controller 42 which communicates with a mobile application processor 44 and a radio 46. Mobile unit 16 comprises a mobile communication controller 48 which communicates with a mobile application processor 50 and a radio 52. Mobile unit 18 comprises a mobile communication controller 54 which communicates with a mobile application processor 56 and a radio 58. Mobile unit 20 comprises a mobile communication controller 60 which communicates with a mobile application processor 62 and a radio 64.

Gateway computers 22 and 32 may be hard wired to their respective host computers or may communicate with them via land line modem or cellular modem. The gateway computers 22 and 32 may be in a different location than the host computers and also may be in a different location than the radios. There is RF communication between the static modes and the mobile units as illustrated.

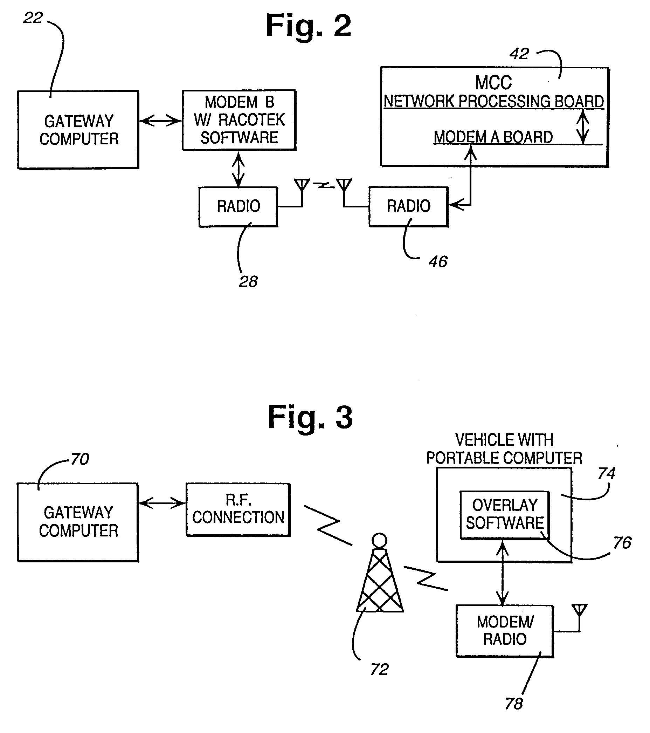

In Fig. 2, mobile communication computer 42 is illustrated having a network processing board and a modem A board, with modem A board communicating with radio 46. In the static mode, gateway computer 22 communicates with modem B having software provided by a network communication service company such as Racotek, Inc. of Minneapolis, Minnesota. Modem B communicates with radio 28 in the static node.

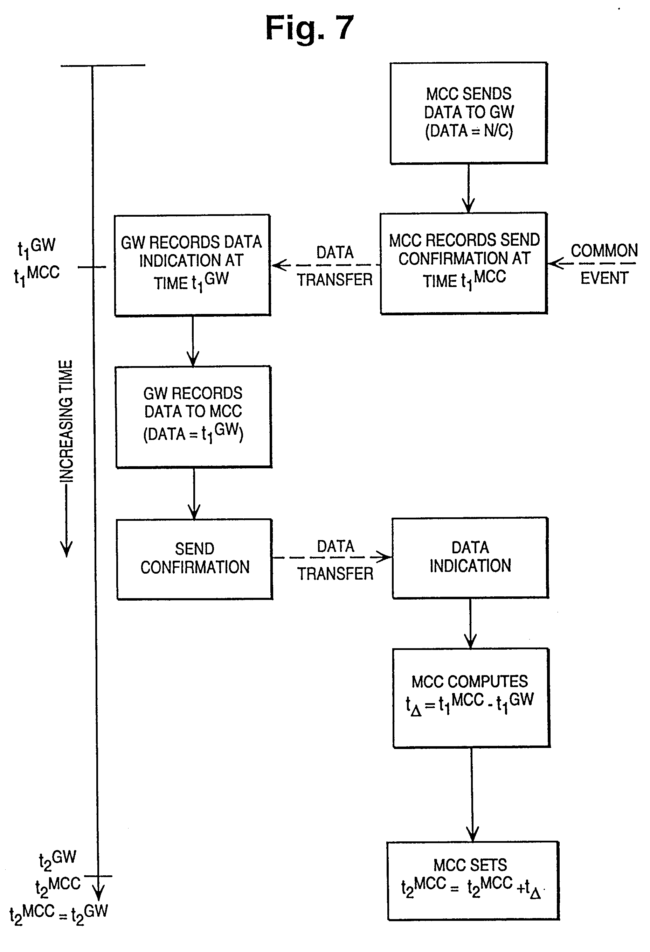

The time synchronization of the Fig. 2 system can be understood by referring to Figs. 2 and 7. First the MCC 42 sends data to the gateway computer at an arbitrary point in time. The data that is sent is referred to as N/C in that the system does not care what the data contains and thus may be arbitrary. At time t₁^{MCC} the MCC records, in the MCC's time frame, the send confirmation from modem A. At time t₁^{GW} the gateway computer records the data indication in that the modem software on modem B detects and reports the time of the event in the gateway computer's time frame. Event though time t₁^{MCC} and time t₁^{GW} may actually be the same time, the computers are not synchronized in that one of them may indicate that the event is happening at 3:00 while the other may indicate that the event is happening at 1:00. In order to synchronize the clocks, after (a) the MCC records its local time when the event occurred and (b) the gateway clock records the time it received the data, (c) the gateway computer sends time data information to the MCC via modem B. Inside the data portion of the message, there is data concerning the time that the event occurred so far as the gateway computer clock recorded it. The time data is received by the MCC after an RF delay and the time data is compared with the event data this is in the MCC. The comparison shows the difference Δ that they are apart and this is the time based difference tΔ indicating how far out of synchronization the gateway clock is with the MCC clock. The MCC's current time is taken and the difference tΔ is added (or subtracted) to effectively synchronize the times.

Although Fig. 2 illustrates a system in which the transmit and receive modems were capable of detecting a common event, Fig. 3 illustrates a system where there is no common event. In such a system, the system does not generate multiple events that are simultaneous in time which the software can detect. Thus referring to Fig. 3, gateway computer 70 transmits via some RF provider such as a land line to tower, cellular phone, etc., and the RF may take a secured route to a radio tower 72, and then be transmitted to the vehicle. The vehicle contains a portable computer 74 having overlay software 76 which is coupled to a modem/radio 78.

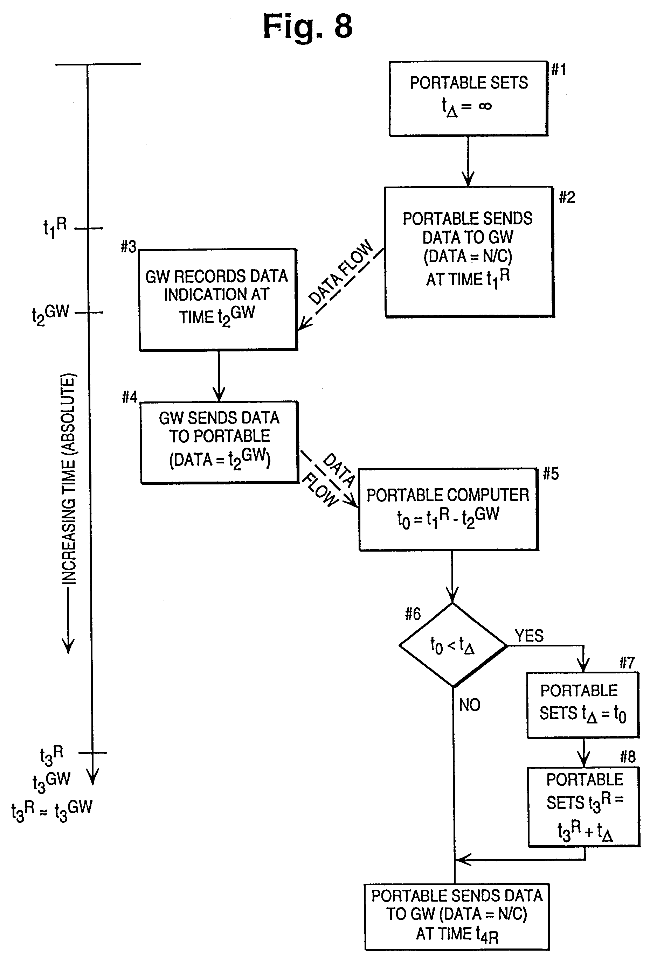

In order to synchronize the clocks of the gateway computer and the portable computer, a system such as illustrated in Fig. 8 is utilized. Referring to Fig. 8, the portable computer first sets tΔ equal to infinity for initialization purposes. In box 2, the portable sends data to the gateway computer. The data that is sent can be arbitrary, and that event occurs at time t₁^{R} in the portable time frame.

The data sent by the portable makes its way through the network to the gateway computer. It takes an indeterminate amount of time, and at time t₂^{GW} that data is received. Thus the data that the portable has originally sent is received at the gateway computer at time t₂^{GW} and that is in the gateway's time frame. The gateway's time frame is different from the portable's time frame and furthermore the events are not simultaneous.

Thereafter, the gateway computer sends data to the portable computer (box 4). This data is transmitted the other direction and at this time the data contains information concerning the time t₂^{GW} that it recorded (box 3). The data is then transmitted back to the portable computer (box 5) and the portable computer computes a difference between t₁ in its time frame and t₂ in the gateway computer's time frame. That difference, i.e. Δ, includes the time difference that it took the data to flow from the portable computer to the gateway computer in the first place, and it also reflects the time difference that is due to the fact that the two clocks are not synchronized.

In box 6, the system asks whether the offset time tₒ is less than the previously recorded Δ time (tΔ). Of course the first offset time tₒ will be less than the previously recorded Δ time tΔ because the initialized system used the previous Δ time of infinity. Since the answer is "yes", the system goes to box 7 and tΔ is set to the tₒ. In other words, whatever tₒ was, now becomes tΔ. That tΔ is an approximation as to the time difference of the lack of synchronization between the two devices. In box 8, the portable is now set to the portable computer's present time plus the time difference tΔ. The system then repeats the steps of boxes 1 through 8.

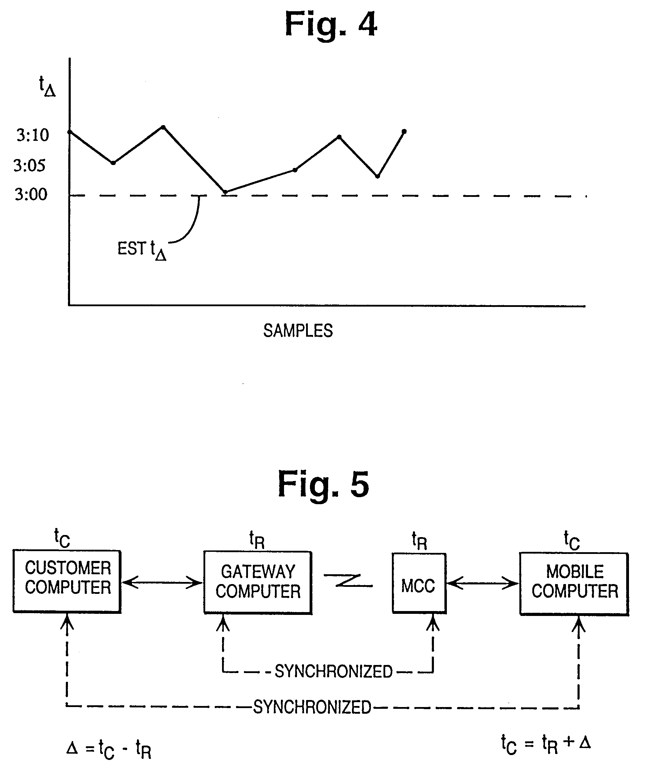

Fig. 4 illustrates the samples of tΔ versus time of the steps of boxes 6 through 8. Unlike the Figs. 2 and 7 embodiment where there is a common event and the synchronization is exact, in the Figs. 3 and 8 embodiment only estimates the synchronization Δ because there are two unknowns. The system must estimate how much of the differences is due to the time base difference between the two computers and how much of the difference is due to the latency across RF. An assumption is made that the difference in clocks due to lack of synchronization is fixed and the difference in clocks due to RF latency is variable. Thus assume that the portable computer sends data to the gateway computer at 2:17 p.m. on the portable computer's clock. Assume that the gateway computer receives the data at 5:22 p.m. on its clock. The gateway computer sends data indicating its receipt at 5:22 p.m. back to the modem in the vehicle. Even though the gateway computer sends the data marked 5:22 p.m., it is already late; it could be minutes or even hours later than 5:22. Thereafter, the modem receives the data from the gateway computer indicating that the gateway computer had received the 2:17 p.m. data at a time when the gateway computer clock read 5:22. Thereafter, the difference in times (5:22 minus 2:17) is calculated, noting that it includes two quantities. One of the unknown quantities is the difference in time base between the two computers and the other unknown quantity is the latency across RF (the amount of time that it took for the message to travel from the modem to the gateway computer).

Thus the system determines a time difference of 3:05 and it makes the assumption that the 3:05 represents the fixed value. On the other hand, the latency across the RF is extremely variable. The steps are repeated numerous times to determine the time difference for a number of samples, as illustrated in Fig. 4. If the first sample is a time difference of 3:10, the second sample is 3:05, the third sample is 3:12, the fourth sample is 3:00, the lowest (which is 3:00) is taken because it is the low order statistic. That is the system's estimator for the fixed delay and is the estimated difference in time base between the two computers.

Referring to Fig. 5, the gateway computer and the MCC are synchronized. In addition, the customer may desire to synchronize the host computer and the mobile computer to a different time base than that of the GW and MCC. In order to obtain synchronization, first the customer supplies from its computer to the gateway computer the time the customer wants its own computer to synchronize to. Second, the gateway computer computes the difference between the customer's time and the time on the gateway computer clock (which is previously synchronized with the time on the MCC clock). Third, the difference is transmitted to the MCC. Fourth, the mobile computer obtains the sync time from the MCC time plus the Δ. Thus Fig. 5 covers a situation in which the customer keeps its own time base and the network company keeps its own time base but there is sufficient synchronization for the network company to operate with the customer and the network's system working together.

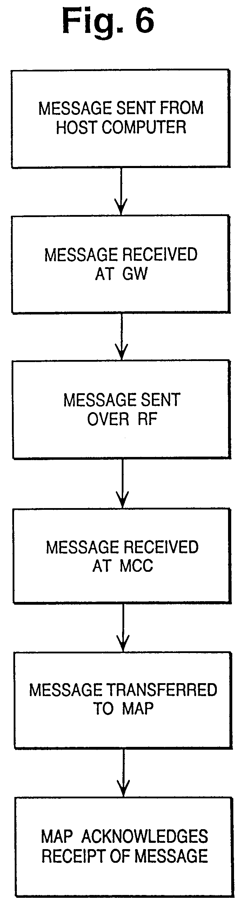

Once there is synchronization, time stamps using a common time base can be applied to each event. These time stamps can be used to measure performance of how long it takes for an event to occur. Referring to Fig. 6, the system can now time tag the complete travel of a message. For example, in Fig. 6, time tagging can occur with respect to the time the message is sent from the host computer, the time the message is received at the gateway computer, the time the message is sent over RF, the time the message is received at the MCC, the time the message is transferred to the MAP, and the time that the MAP acknowledges receipt of the message. Each of these items can be time tagged to a common time base and the information placed in an appropriate data base. Accessing the data base to determine the time tags aids in determining the cause of delays. However, such determination requires that there be proper time synchronization using the methods of the present invention.

Although illustrative embodiments of the invention have been shown and described, it is to be understood that various modifications and substitutions may be made by those skilled in the art without departing from the novel spirit and scope of the present invention.

## Claims

1. A data communication system having time synchronization over RF or other high latency infrastructure, between a first location having a first clock and a first data transmission device and a second location having a second clock and a second data transmission device, including the steps of:
determining a first time corresponding to said first clock time;
determining a second time corresponding to said second clock time;
transmitting data concerning one of said first time and second time from its respective data transmission device to the other data transmission device;
comparing said second time with said first time;
calculating the difference between said second time and said first time; and
adjusting one of said first clock and second clock to synchronize with the other of said first clock and second clock.

2. A system as defined by Claim 1, in which said data transmitting step comprises transmitting time data concerning said second time from said second data transmission device to said first data transmission device.

3. A system as defined by Claim 1, in which said transmitting time data step comprises transmitting data concerning said first time from said first data transmission device to said second data transmission device.

4. A data communication system having time synchronization over RF or other high latency infrastructure, between a first location having a first clock and a first data transmission device and a second location having a second clock and a second data transmission device, including the steps of:
transmitting data from said first data transmission device to said second data transmission device;
determining a first time corresponding to said first clock time when said data is sent from said first data transmission device;
determining a second time corresponding to said second clock time when said data is received by said second data transmission device;
comparing said second time with said first time;
calculating the difference between said second time and said first time; and
adjusting one of said first clock and second clock to synchronize with the other of said first clock and second clock.

5. A data communication system having time synchronization over RF or other high latency infrastructure, between a first location in which there is a first computer with a first clock and a first data transmission device, and a second location in which there is a second computer with a second clock and a second data transmission device, including the steps of:
transmitting data from said first data transmission device to said second data transmission device;
determining a first time corresponding to said first clock time when said data is sent from said first data transmission device;
determining a second time corresponding to said second clock time when said data is received by said second data transmission device;
transmitting time data concerning said second time from said second data transmission device to said first data transmission device;
comparing said second time with said first time;
calculating the difference between said second time and said first time; and
adjusting said second clock to synchronize with said first clock, said adjusting step comprising one of adding and subtracting said difference calculated between said second time and said first time.

6. A data communication system having time synchronization over RF or other high latency infrastructure, between a first location having a first clock and a first data transmission device and a second location having a second clock and a second data transmission device, including the steps of:
a) transmitting data from said first data transmission device to said second data transmission device;
b) determining a first time corresponding to the time on said fist clock when said data is sent from said first data transmission device;
c) determining a second time corresponding to the time on said second clock when said data is received by said second data transmission device;
d) comparing said second time with said first time;
e) calculating the difference between said second time and said first time;
f) repeating steps (a) through (e) a plurality of times; and
g) adjusting said first clock time to synchronize with said second clock time, said adjusting step comprising adding to said first time the smallest difference calculated between said second time and said first time to provide a synchronized time on said first clock.

7. A data communication system having time synchronization over RF or other high latency infrastructure, between a first location having a first clock and a first data transmission device and a second location having a second clock and a second data transmission device, including the steps of:
a) transmitting data from said first data transmission device to said second data transmission device;
b) determining a first time corresponding to the time on said first clock when said data is sent from said first data transmission device;
c) determining a second time corresponding to the time on said second clock when said data is received by said second data transmission device;
d) comparing said second time with said first time;
e) calculating the difference between said second time and said first time;
f) repeating steps (a) through (e) a plurality of times; and
g) adjusting said first clock time to synchronize with said second clock time, said adjusting step comprising adding to said first time a selected difference calculated between said second time and said first time to provide a synchronized time on said first clock.

8. A system as defined by Claim 7, in which the selected difference is determined by determining whether the last difference between the second time and the first time is less than the calculated previous difference between the second time and the first time; if the difference is less, then adjusting the time of the first clock to synchronize with the time of the second clock; but if the difference is not less, then not adjusting the first clock time.

9. A data communication system having time synchronization over RF or other high latency infrastructure, system for data communication via radio between a first location having a first clock and a first data transmission device, and a second location having a second clock and a second data transmission device, including the steps of:
transmitting data from said first data transmission device to said second data transmission device;
determining a first time corresponding to said first clock time when said data is sent from said first data transmission device;
determining a second time corresponding to said second clock time when said data is received by said second data transmission device;
comparing said second time with said first time;
calculating the difference between said second time and said first time;
adjusting said first clock to synchronize with said second clock, said adjusting step comprising adding to said first time said difference calculated between said second time and said first time to provide a third time on said first clock.

10. A system as defined by Claim 9, including the further steps of:
transmitting further data from said first data transmission device to said second data transmission device;
determining a fourth time corresponding to the time on said first clock when said data is sent from said first data transmission device;
determining a fifth time corresponding to the time on said second clock when said data is received by said second data transmission device;
comparing said fifth time with said fourth time;
calculating the difference between said fifth time and said fourth time;
adjusting said first clock to synchronize with said second clock, said adjusting step comprising adding to said third time said difference calculated between said fifth time and said fourth time.
